# FASCICULE DE BREVET EUROPEEN

(11) **EP 2 191 950 B1**
(45) Date de publication et mention de la délivrance du brevet: **17.07.2013**
(21) Numéro de dépôt: 09177037.0
(22) Date de dépôt: 25.11.2009
(51) Int. Cl.: B29C 45/00

(54) **Procédé et dispositif de moulage de pièces par injection avec assemblage intégré de deux parties constitutives**
Verfahren und Vorrichtung zum Spritzgiesen von Bauteil mit gleichzeitiger Montage der spritzgegossenen Halbzeuge
Process and apparatus for injection moulding with integrated assembly of the injection moulded intermediate components

(30) Priorité: 27.11.2008 FR 0806672
(43) Date de publication de la demande: 02.06.2010
(73) Titulaire: JP Grosfilley, 01100 Martignat (FR)
(72) Inventeur: Grosfilley, Jean Pierre, 01100 Martignat (FR)
(74) Mandataire: Maureau, Philippe

(56) Documents cités:
- EP-A- 1 060 868
- FR-A- 2 841 174
- FR-A- 2 902 365
- JP-A- 6 182 806
- JP-A- 10 175 230
- JP-A- 2000 043 100
- US-A1- 2006 249 876
- CHRISTOPH JAROSCHEK: "Spritzgiessen für Praktiker" 2003, HANSER , XP002535826 ISBN: 3-446-21400-3 * page 115 - page 119; figures 4.28,4.29 * * page 116, alinéa 2 *

## Description

La présente invention concerne, de façon générale, les procédés et les outillages de moulage par injection de pièces, notamment des pièces en matière synthétique. Plus particulièrement, cette invention s'intéresse à un procédé, et à un dispositif mettant en oeuvre le procédé, réalisant un moulage par injection de corps entièrement ou partiellement creux, constitués de deux parties complémentaires accolées souvent désignées comme « demi-coquilles », le procédé et le dispositif convenant aussi à l'injection d'autres genres de pièces nécessitant un assemblage de deux parties moulées séparément. Encore plus particulièrement, il s'agit d'un procédé et d'un dispositif dans lequel les deux parties constitutives ou demi-coquilles de chaque pièce sont réunies par un joint ou autre partie intermédiaire réalisé notamment par injection dans le même moule que ces deux parties constitutives ou demi-coquilles, ce qui peut être désigné comme un « assemblage intégré ».

Par le brevet français N° FR 2 794 679 au nom du même inventeur, ou le brevet européen correspondant N° EP 1060868, on connaît déjà une technique de moulage dans laquelle les deux parties constitutives ou demi-coquilles d'une pièce creuse sont réalisées séparément par injection dans un même moule, puis sont rapprochées l'une de l'autre à l'intérieur du même moule, et sont assemblées l'une à l'autre dans ce moule par l'injection d'un joint ou autre partie intermédiaire.

A cet effet, le moule d'injection décrit dans les brevets précités comprend principalement :
- un corps de moule fixe avec un noyau de moulage excentré,
- un corps de moule mobile avec un autre noyau de moulage excentré, situé à l'opposé du précédent,
- une première partie tournante située entre le corps de moule fixe et le corps de moule mobile, avec deux empreintes de moulage,
- une deuxième partie tournante située entre le corps de moule fixe et le corps de moule mobile, avec deux autres empreintes de moulage.
- des moyens d'entraînement en rotation des deux parties tournantes autour de leurs axes respectifs, qui sont parallèles à l'axe central du moule et disposés symétriquement par rapport à cet axe central,
- des moyens de déplacement en translation, suivant leurs axes respectifs, des deux parties tournantes.

Ainsi, une première partie constitutive, telle qu'une demi-coquille de la pièce à réaliser, est injectée par exemple dans la partie haute du moule, au niveau du noyau de moulage excentré du corps de moule fixe et d'une empreinte de moulage de la première partie tournante, qui avec ce noyau de moulage délimite une première cavité de moulage.

Simultanément, une deuxième partie constitutive, telle qu'une demi-coquille complémentaire de la précédente, de la pièce à réaliser, est injectée par exemple dans la partie basse du moule, au niveau du noyau de moulage excentré du corps de moule mobile et d'une empreinte de moulage de la deuxième partie tournante, qui avec ce noyau de moulage délimite une deuxième cavité de moulage.

Ensuite, les deux parties tournantes effectuent l'une et l'autre une rotation de 180° autour de leurs axes respectifs et ainsi, les deux parties constitutives ou demi-coquilles sont transférées dans la zone centrale du moule, où est formée une troisième cavité de moulage. Les deux parties constitutives ainsi rapprochées sont alors assemblées l'une à l'autre, dans cette zone centrale du moule, par injection d'un joint. Une pièce complète est ainsi obtenue, qui peut être en particulier un corps creux qui ne serait pas réalisable directement par injection.

Au lieu d'un tel assemblage par surmoulage d'un joint, on peut aussi envisager un assemblage mécanique par encliquetage ou autre mode de liaison des deux parties préalablement injectées, en conservant le principe d'une « double rotation », c'est-à-dire de deux parties de moule tournantes qui amènent respectivement les deux parties constitutives ou demi-coquilles dans la zone centrale du moule.

La double empreinte de moulage de chaque partie tournante permet d'assembler les deux demi-coquilles précédemment moulées et déjà transférées dans la zone centrale du moule, pendant que s'effectue l'injection des deux demi-coquilles de la pièce suivante.

Bien que très satisfaisant dans son principe, un tel moule constitue un outillage dont la mise en oeuvre sur une presse à injecter reste complexe et coûteuse, en particulier du fait que ce moule comporte deux parties tournantes qui doivent être entraînées l'une et l'autre en rotation autour d'axes respectifs décalés par rapport à l'axe central du moule, donc aussi par rapport aux axes des plateaux de la presse à injecter. Des équipements spéciaux et lourds, incluant des engrenages, sont nécessaires pour l'obtention d'une telle « double rotation ».

La présente invention vise à remédier à ces inconvénients, et cette invention a donc pour but de fournir un procédé et un dispositif de moulage de pièces par injection, permettant toujours un assemblage dans le moule mais simplifiés dans leur mise en oeuvre et leur structure, de manière à alléger l'investissement nécessaire.

A cet effet, l'invention a premièrement pour objet un procédé de moulage de pièces par injection avec assemblage intégré, c'est-à-dire des pièces telles que des corps creux, composées de deux parties constitutives ou demi-coquilles réunies par un joint ou autre partie intermédiaire, le procédé prévoyant le moulage par injection des deux parties constitutives ou demi-coquilles dans un même moule d'injection, dans des zones respectives de ce moule éloignées l'une de l'autre, puis le transfert des deux parties ou demi-coquilles moulées vers la zone centrale du moule, et l'assemblage de ces deux parties ou demi-coquilles l'une à l'autre dans cette zone centrale, par surmoulage d'un joint ou par une liaison mécanique, avant extraction de la pièce finie hors du moule, ce procédé étant caractérisé par le fait que l'une des deux parties constitutives ou demi-coquilles de cette pièce est transférée par rotation, à l'intérieur du moule depuis sa zone excentrée de moulage vers la zone centrale du moule, mais en dehors de l'axe central du moule, tandis que l'autre des deux parties constitutives ou demi-coquilles de la même pièce est transférée en restant sensiblement parallèle à elle-même, depuis sa zone excentrée de moulage vers la zone centrale du moule, mais en dehors de l'axe central du moule, en vue d'être assemblée à la première partie constitutive ou demi-coquille, transférée par rotation.

De préférence, le transfert de la première des deux parties constitutives ou demi-coquilles de chaque pièce, depuis sa zone excentrée de moulage vers la zone centrale du moule, mais en dehors de l'axe central du moule, est réalisé par une rotation de 180° autour de l'axe central du moule.

Avantageusement, le transfert de la seconde des deux parties constitutives ou demi-coquilles de chaque pièce, depuis sa zone excentrée de moulage vers la zone centrale du moule, mais en dehors de l'axe central du moule, est réalisé par une translation suivant une direction radiale, par rapport à l'axe central du moule.

Ainsi, le procédé selon l'invention consiste notamment à réaliser le transfert d'une partie moulée ou demi-coquille, à l'intérieur du moule d'injection, dans un plan par une rotation de 180° de préférence centrée dans le moule, lui-même centré dans les plateaux de la presse à injecter, tandis que le transfert de l'autre partie moulée ou demi-coquille peut être réalisé, lui aussi à l'intérieur du moule, par une simple translation. Le moule peut donc ne comporter qu'une seule partie tournante, au lieu de deux.

Le procédé de l'invention peut ainsi être mis en oeuvre de manière simple et économique, en commandant un unique mouvement de rotation autour d'un axe qui est centré par rapport au moule et aux plateaux de la presse à injecter. La « double rotation » est ainsi évitée, et la mise en oeuvre du procédé peut faire appel à des équipements plus légers et actuellement courants dans le domaine de la plasturgie et, plus particulièrement, dans la technique du moulage simultané de plusieurs composants.

En particulier, le procédé de l'invention peut être mis en oeuvre sur une presse à injecter classique, avantageusement équipée d'une base mécanique tournante selon le brevet français N° FR 2 725 152 au nom du même inventeur, pour l'actionnement du mouvement de rotation de l'unique partie tournante autour de l'axe central du moule. Le transfert par translation de l'autre partie ou demi-coquille moulée est réalisable à l'aide d'un manipulateur ou robot industriel, de type actuellement courant.

Le procédé de l'invention convient plus particulièrement à un moulage réalisé avec un nombre d'empreintes faible, typiquement une ou deux empreintes, et pour des parties moulées qui, pendant leur transfert par le manipulateur ou robot, présentent un retrait de matière restant faible, et ne provoquant pas de déformation importante, laquelle pourrait nuire au bon accostage des deux parties constitutives ou demi-coquilles en vue de leur assemblage.

L'invention a aussi pour objet un dispositif spécialement conçu pour la mise en oeuvre du procédé ci-dessus défini.

Ce dispositif de moulage de pièces par injection avec assemblage intégré comprend en combinaison :
- un corps de moule mobile avec un noyau de moulage excentré pour l'une des parties constitutives ou demi-coquilles à mouler, et avec une empreinte de moulage excentrée, et située à l'opposé dudit noyau de moulage, pour l'autre des parties constitutives ou demi-coquilles à mouler,
- un corps de moule fixe avec un noyau de moulage excentré pour l'autre des parties constitutives ou demi-coquilles à mouler, ce noyau de moulage étant situé en regard de l'empreinte de moulage du corps de moule mobile,
- une partie tournante unique avec deux empreintes de moulage diamétralement opposées, dont les fonds respectifs sont dirigés vers le corps de moule mobile, la partie tournante étant montée rotative autour de l'axe central du moule et étant aussi mobile en translation le long de cet axe central, chaque empreinte de moulage de cette partie tournante pouvant venir en correspondance avec le noyau de moulage du corps de moule mobile, pour le moulage de l'une des parties constitutives ou demi-coquilles à mouler, ou par une rotation de 180° venir en correspondance avec un emplacement d'assemblage situé sur le corps de moule mobile entre l'axe central du moule et l'empreinte de moulage du corps de moule mobile, pour l'amenée de cette partie constitutive ou demi-coquille moulée à l'emplacement d'assemblage,
- des moyens de transfert, essentiellement par translation, de l'autre partie constitutive ou demi-coquille moulée, entre l'empreinte de moulage du corps de moule mobile, d'une part, et l'emplacement d'assemblage situé sur ce même corps de moule, d'autre part,
- des moyens d'assemblage des deux parties constitutives ou demi-coquilles moulées, à l'emplacement d'assemblage, et
- des moyens d'extraction, hors du moule, de chaque pièce finie résultant de l'assemblage des deux parties constitutives ou demi-coquilles.

Ainsi, le moule selon l'invention est conçu avec une seule partie tournante, dont l'axe de rotation est confondu avec l'axe central du moule. La rotation de cette partie tournante amène chaque partie constitutive ou demi-coquille, injectée dans une zone périphérique du moule, vers la zone centrale du moule et plus particulièrement à un emplacement d'assemblage, où l'autre partie constitutive ou demi-coquille est aussi amenée par translation, depuis une autre zone périphérique du moule où cette autre partie constitutive ou demi-coquille a été elle aussi injectée.

Les moyens de transfert, essentiellement par translation, de cette autre partie constitutive ou demi-coquille, depuis ladite zone périphérique du moule vers l'emplacement d'assemblage, sont avantageusement constitués par un manipulateur ou robot, pourvu d'une main de préhension qui est adaptée à la géométrie des parties ou pièces moulées. De préférence, le même manipulateur ou robot constitue, à la fois, les moyens de transfert de ladite autre partie constitutive ou demi-coquille vers l'emplacement d'assemblage, et les moyens d'extraction hors du moule des pièces finies résultant de l'assemblage des deux parties constitutives ou demi-coquilles.

Le manipulateur ou robot peut ainsi, dans un seul mouvement d'aller-retour, amener une partie constitutive ou demi-coquille vers l'emplacement d'assemblage, et extraire de cet emplacement la pièce finie précédemment assemblée.

Dans un mode de réalisation particulier, l'emplacement d'assemblage est réalisé comme un poste de moulage par injection d'un joint ou autre partie intermédiaire, réunissant les deux parties constitutives ou demi-coquilles moulées amenées audit emplacement d'assemblage. Dans ce cas, le corps de moule fixe comporte des moyens d'amenée de matière à injecter vers les emplacements de moulage des deux parties constitutives ou demi-coquilles, ainsi que vers l'emplacement d'assemblage de ces deux parties constitutives ou demi-coquilles ; ces moyens d'amenée de matière à injecter comprennent en particulier des buses d'injection, avec :
- une première buse d'injection située, sur le corps de moule fixe, en regard du noyau de moulage excentré porté par le corps de moule mobile, et apte aussi à venir en correspondance avec une empreinte de moulage de la partie tournante, pour le moulage de l'une des parties constitutives ou demi-coquilles,
- une deuxième buse d'injection située, sur le corps de moule fixe, en regard de l'empreinte de moulage excentrée portée par le corps de moule mobile, pour le moulage de l'autre des parties constitutives ou demi-coquilles, et
- une troisième buse d'injection située, sur le corps de moule fixe, en regard de l'emplacement d'assemblage, pour le moulage du joint ou partie intermédiaire réunissant les deux parties constitutives ou demi-coquilles, cette troisième buse d'injection étant prévue pour s'engager dans une ouverture traversante ménagée dans la partie tournante du moule.

L'unique partie tournante du moule est avantageusement solidaire d'un arbre de support et d'entraînement qui traverse de façon coulissante le corps de moule mobile, cet arbre étant de préférence un arbre cannelé sur au moins une fraction de sa longueur. Un tel arbre est notamment prévu pour être accouplé à une base mécanique tournante, pour l'entraînement en rotation de ladite partie tournante.

L'invention sera mieux comprise à l'aide de la description qui suit, en référence au dessin schématique annexé représentant, à titre d'exemple, une forme d'exécution de ce dispositif de moulage de pièces par injection avec assemblage intégré.
Figure 1 est une vue en coupe passant par l'axe central d'un moule conforme à la présente invention, représenté en position de fermeture ;
Figure 2 est une vue en coupe passant par l'axe central du moule de la figure 1, ici représenté en position d'ouverture ;
Figure 3 est une vue similaire à la figure 2, le moule était ici encore représenté ouvert, mais dans une autre phase du cycle de fonctionnement ;
Figure 4 est une vue similaire aux précédentes, le moule étant ici encore représenté ouvert, mais dans une phase ultérieure du cycle de fonctionnement ;
Figure 5 est une vue de face (côté intérieur) du corps de moule mobile ;
Figure 6 est une vue de face (côté intérieur) du corps de moule fixe ;
Figure 7 est un schéma qui illustre un mode d'assemblage par surmoulage d'un joint ;
Figure 8 est un autre schéma qui illustre un mode d'assemblage par encliquetage ;
Figure 9 est encore un autre schéma, qui illustre un mode d'assemblage par rivetage.

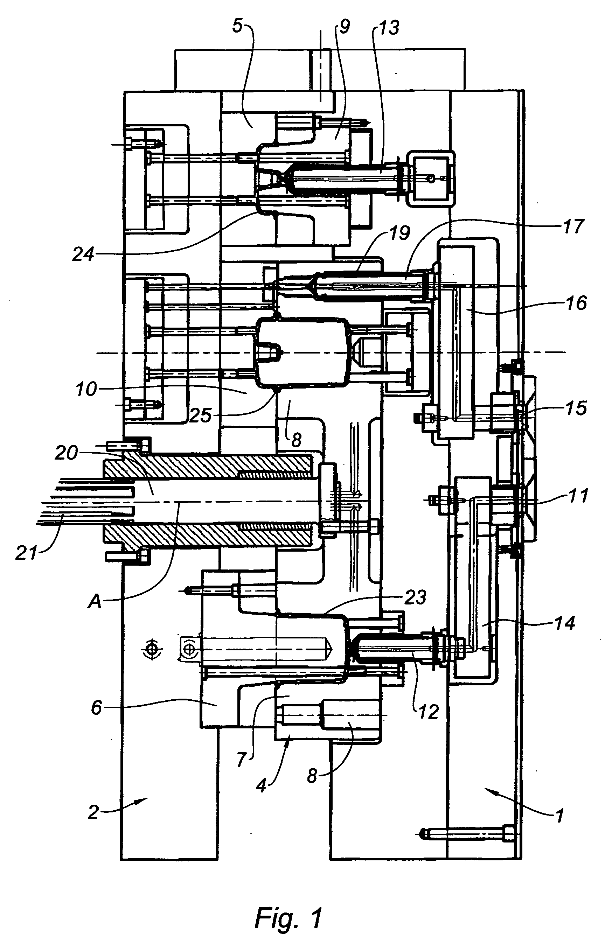

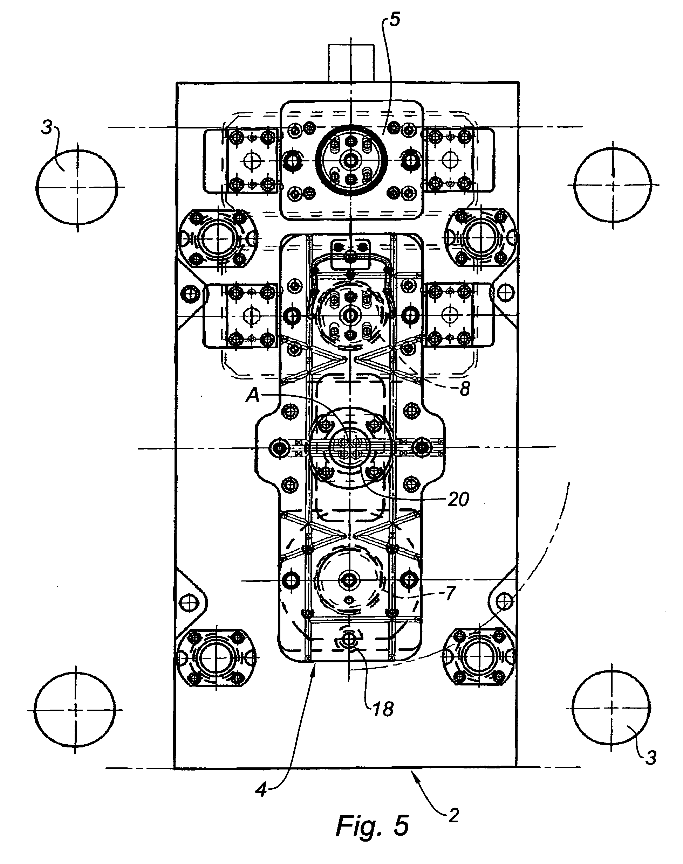

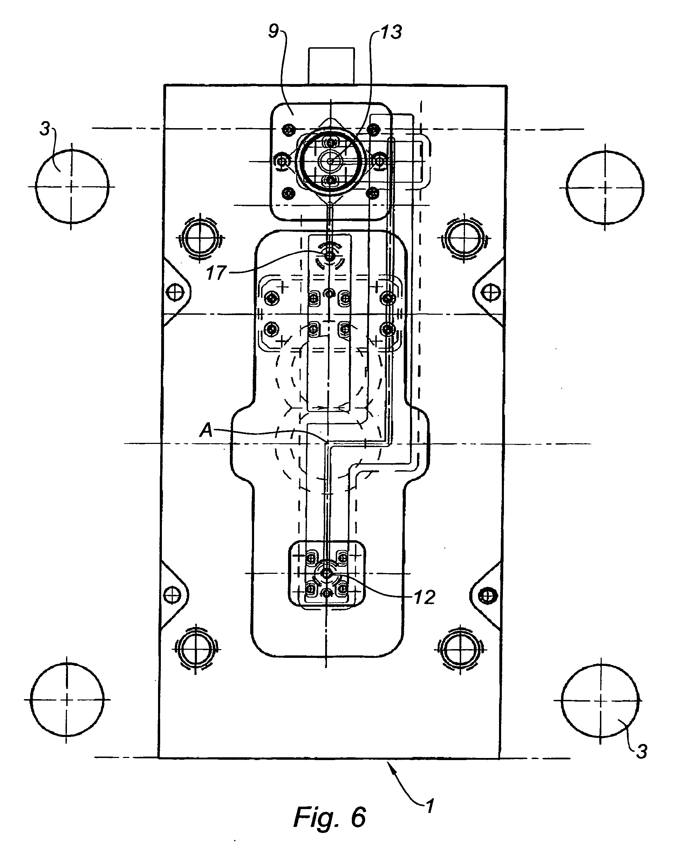

Le moule d'injection, représenté sur les figures 1 à 6, comprend un corps de moule fixe 1, disposé verticalement (en utilisation sur une presse à injecter), et un corps de moule mobile 2 lui aussi disposé verticalement, en regard du corps de moule fixe 1. Le corps de moule mobile 2 est déplaçable horizontalement, sur des colonnes de guidage 3 (voir figures 5 et 6), de manière à pouvoir être rapproché ou éloigné du corps de moule fixe 1.

Le moule comprend aussi une partie tournante 4, située entre le corps de moule fixe 1 et le corps de moule mobile 2. La partie tournante 4 est montée mobile en rotation, et aussi en translation, suivant l'axe central A du moule.

Le corps de moule mobile 2 comporte du côté intérieur, et dans sa partie supérieure donc au-dessus de l'axe A, une empreinte de moulage 5. Ce corps de moule mobile 2 comporte aussi du côté intérieur, et dans sa partie inférieure donc au-dessous de l'axe A, un noyau de moulage 6.

La partie tournante 4 du moule comporte deux empreintes de moulage 7 et 8 identiques, diamétralement opposées, dont les fonds respectifs sont dirigés vers le corps de moule mobile 2.

Le corps de moule fixe 1 comporte du côté intérieur, et dans sa partie supérieure, un noyau de moulage 9 situé en regard de l'empreinte de moulage 5 du corps de moule mobile 2.

Ce corps de moule mobile 2 comporte encore, entre l'axe central A et l'empreinte de moulage 5, un emplacement d'assemblage 10 qui prend ici la forme d'une empreinte de moulage, analogue à la précédente empreinte de moulage 5.

Le corps de moule fixe 1 comporte des moyens d'amenée de matière à injecter, notamment de matière synthétique, en correspondance avec les empreintes et noyaux de moulage précédemment mentionnés.

Ainsi, ces moyens comprennent une première arrivée de matière 11, placée en position centrale sur l'axe A, qui alimente une première buse d'injection 12 et une deuxième buse d'injection 13. La première buse d'injection 12 est située, sur le corps de moule fixe 1, dans la partie basse en regard du noyau de moulage 6 porté par le corps de moule mobile 2. La deuxième buse d'injection 13 est située, sur le corps de moule fixe 1, dans la partie haute en regard de l'empreinte de moulage 5 portée par le corps de moule mobile 2. L'arrivée de matière 11 est reliée aux deux buses 12 et 13 par des blocs chauds d'injection, tels que le bloc 14, incorporés au corps de moule fixe 1.

Les moyens d'amenée de matière à injecter comprennent encore une seconde arrivée de matière 15, située à proximité de la première arrivée 11. La seconde arrivée de matière 15 alimente, en passant par un autre bloc chaud d'injection 16, une troisième buse d'injection 17 qui est située, sur le corps de moule fixe 1, au-dessous de la première buse 12 et en regard de l'emplacement d'assemblage 10.

Dans la mesure où la troisième buse d'injection 17 se situe aussi en regard de la périphérie de la partie tournante 4 du moule, cette partie tournante 4 comporte à sa périphérie deux ouvertures traversantes 18 et 19, diamétralement opposées, au travers desquelles la troisième buse d'injection 17 est susceptible de s'engager.

La partie tournante 4, de forme générale oblongue (voir figure 5), est solidarisée par sa zone centrale avec un arbre 20 de support et d'entraînement, disposé horizontalement suivant l'axe central A du moule. L'arbre 20, pourvu de cannelures 21 sur une fraction de sa longueur, est monté tournant et coulissant dans le corps de moule mobile 2. Cet arbre 20 est accouplé à une base mécanique tournante (non représentée), réalisable conformément au brevet français N° FR 2 725 152.

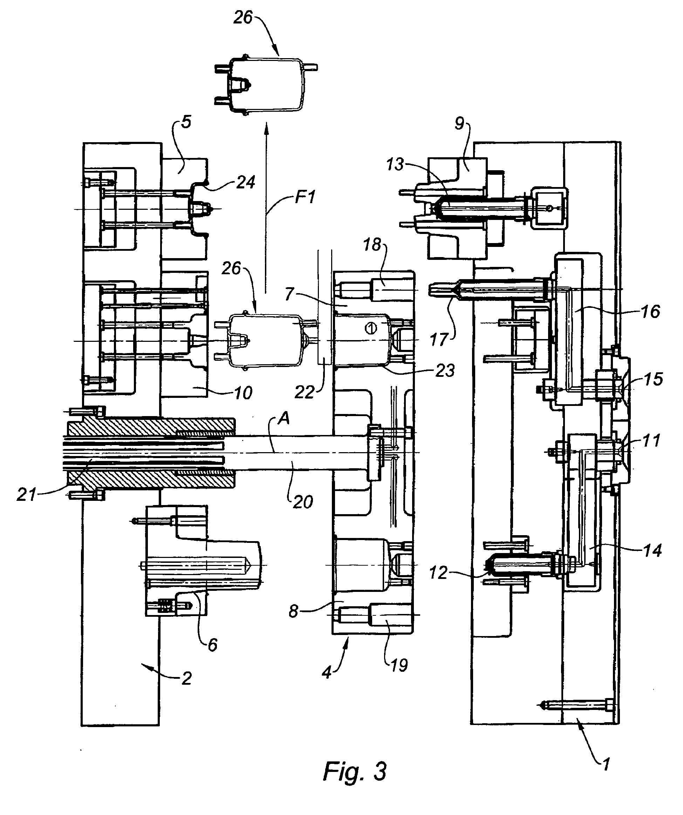

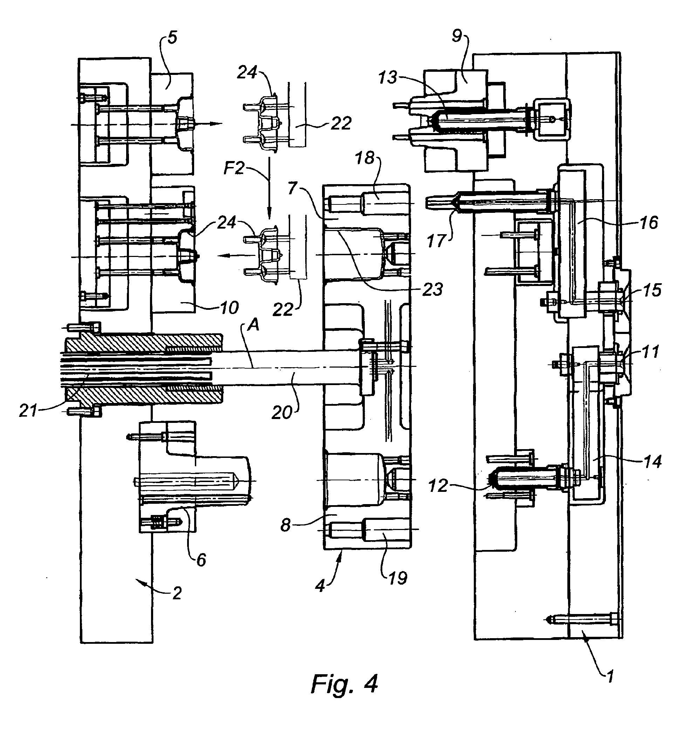

Le dispositif comprend encore un manipulateur ou robot, avec un bras et une main de préhension adaptée, qui est déplaçable essentiellement en translation dans un plan vertical perpendiculaire à l'axe central A du moule. Ce manipulateur ou robot est représenté de façon partielle sur les figures 3 et 4, par l'indication sommaire de la partie terminale de son bras 22.

Enfin, d'une manière généralement connue et ici non détaillée, des broches et des éjecteurs sont associés aux différents noyaux et empreintes de moulage, pour réaliser l'extraction des parties ou pièces moulées.

Le dispositif précédemment décrit, composé du moule proprement dit et du manipulateur ou robot (bras 22), est utilisable pour le moulage de pièces creuses composées de deux demi-coquilles réunies par un joint périphérique extérieur. Le cycle de fonctionnement de ce dispositif est décrit ci-après, en considérant cette application particulière.

Dans une première étape d'un cycle de moulage et d'assemblage, comme le montre la figure 1, le moule est fermé, c'est-à-dire que le corps de moule mobile 2 est rapproché du corps de moule fixe 1, en enserrant la partie tournante 4. Ainsi, trois cavités de moulage sont simultanément formées dans ce moule :
- Une première cavité de moulage résulte du rapprochement du noyau de moulage 6 du corps de moule mobile 2 et d'une empreinte de moulage 7 de la partie tournante 4 du moule.
- Une deuxième cavité de moulage résulte du rapprochement de l'empreinte de moulage 5 du corps de moule mobile 2 et du noyau de moulage 9 du corps de moule fixe 1.
- Une troisième cavité de moulage résulte du rapprochement de l'empreinte du moulage de l'emplacement d'assemblage 10, sur le corps de moule mobile 2, et de l'autre empreinte de moulage 8 de la partie tournante 4 du moule.

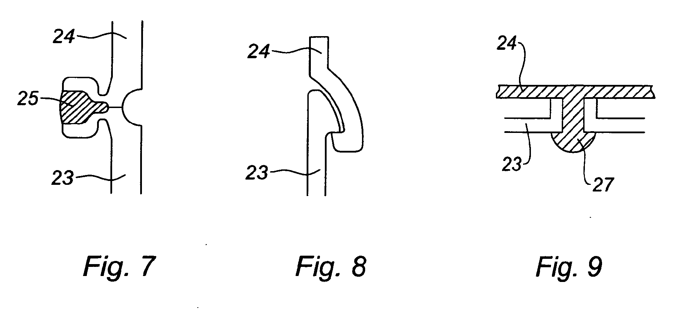

Ces trois cavités de moulage peuvent alors être alimentées de façon simultanée, en matière à injecter, respectivement par les trois buses d'injection 12, 13 et 17, la troisième buse 17 traversant l'ouverture 18 de la partie tournante 4. Ainsi, sont simultanément moulés :
- dans la première cavité de moulage, une première demi-coquille 23 constitutive d'une pièce creuse à réaliser ;
- dans la deuxième cavité de moulage, une autre demi-coquille 24, constitutive de la même pièce creuse à réaliser ;
- dans la troisième cavité de moulage, un joint périphérique 25 (voir aussi figure 7) qui, surmoulant les bords rapprochés de deux demi-coquilles 23 et 24 qui ont été moulées au cours du cycle précédent, réunira ces deux demi-coquilles.

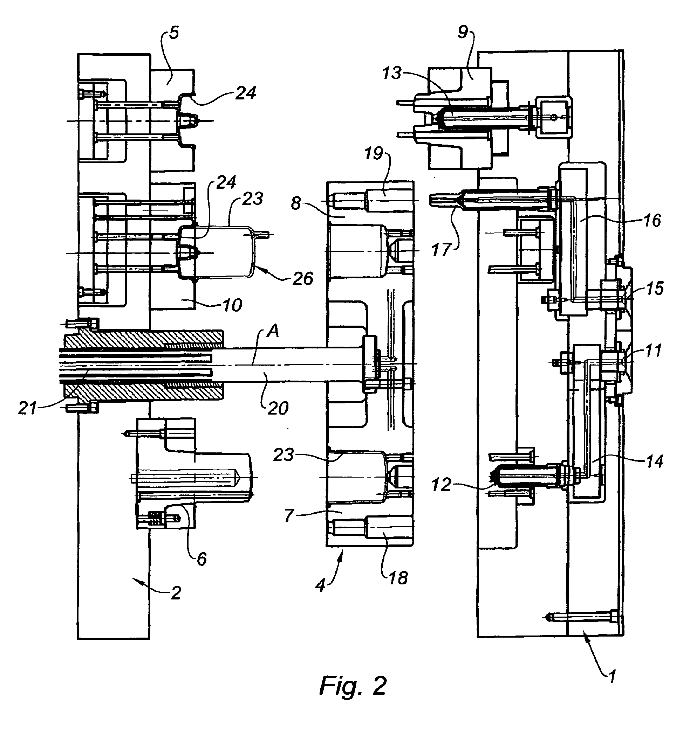

Ensuite, le moule est ouvert, le corps de moule mobile 2 s'écartant du corps de moule fixe 1, et la partie tournante 4 s'écartant elle-même de corps de moule fixe 1 et du corps de moule mobile 2 par coulissement de l'arbre 20 (voir figure 2). Dans cette étape, la première demi-coquille 23 qui vient d'être formée est maintenue dans l'empreinte 7 de la partie tournante 4. Une pièce finie 26, résultant de la réunion de deux demi-coquilles 23 et 24 par le joint 25, se trouve en attente à l'emplacement d'assemblage 10.

A l'étape suivante, illustrée par la figure 3, la partie tournante 4 effectue une rotation de 180° autour de l'axe central A du moule, tandis que le bras 22 du manipulateur ou robot extrait la pièce finie 26 de l'emplacement d'assemblage 10 et l'évacue hors du moule, comme le symbolise la flèche F1.

Dans le même mouvement d'aller-retour, le bras 22 du manipulateur ou robot vient aussi prélever la demi-coquille 24 en attente sur l'empreinte de moulage 5, et il amène cette demi-coquille 24 dans l'empreinte de l'emplacement d'assemblage 10 - voir figure 4, flèche F2.

La précédente rotation de la partie tournante 4 a amené la demi-coquille 23 en regard de l'emplacement d'assemblage 10, de sorte que les deux demi-coquilles 23 et 24 se trouvent désormais mises en correspondance.

La main de préhension du manipulateur ou robot ayant été écartée de l'intérieur du moule après dépose de la demi-coquille 24, le moule est refermé et il est procédé à une nouvelle injection de matière dans les trois cavités de moulage alors formées comme déjà décrit précédemment. Ainsi, deux nouvelles demi-coquilles 23 et 24 sont moulées dans les empreintes correspondantes, tandis qu'un nouveau joint 25 est surmoulé pour réunir les demi-coquilles 23 et 24 qui viennent d'être transférées à l'emplacement d'assemblage 10.

Le moule reste fermé pendant tout le temps nécessaire à l'injection, au maintien en pression de la matière injectée et au refroidissement, puis ce moule est ouvert pour le transfert des demi-coquilles 23 et 24 et l'extraction de la nouvelle pièce finie 26 et ainsi de suite.....

Le fonctionnement peut ainsi se poursuivre indéfiniment, l'assemblage des deux demi-coquilles 23 et 24 d'une pièce s'effectuant simultanément au moulage des deux demi-coquilles de la pièce suivante, et les rôles des deux empreintes 7 et 8 de la partie tournante 4 étant échangés à chaque rotation de 180° de cette partie tournante.

Les pièces finies, extraites par le manipulateur ou robot à chaque ouverture du moule, peuvent être posées par un manipulateur ou robot sur un tapis roulant ou autre transporteur qui les évacue. Ces pièces finies peuvent aussi être directement posées, par le manipulateur ou robot, dans des emballages prévus pour les recevoir en vue de leur transport.

Dans une variante, au lieu de réaliser dans le moule un assemblage des deux demi-coquilles 23 et 24 par surmoulage d'un joint périphérique, il est réalisé un assemblage par encliquetage, grâce à des formes complémentaires prévues sur les bords respectifs des deux demi-coquilles 23 et 24, comme l'illustre la figure 8.

Dans une autre variante, illustrée sur la figure 9, l'assemblage est réalisé par rivetage, avec un ou plusieurs rivets 27.

Dans tous les cas, et quel que soit le procédé d'assemblage, l'opération d'assemblage est réalisée dans le moule d'injection et de manière intégrée au cycle de moulage, ce qui procure un gain de productivité important.

On ne s'éloignerait pas du cadre de l'invention, telle que définie dans les revendications annexées : :
- en modifiant l'orientation des composants du moule, ou les positions des noyaux et empreintes du moulage ;
- en modifiant la forme, et en particulier le contour, de la partie tournante du moule,
- en prévoyant une seule arrivée de matière à injecter, ou au contraire trois arrivées distinctes, selon que les deux demi-coquilles et le joint sont à réaliser dans une même matière ou dans des matières distinctes ;
- en prévoyant tout mode d'assemblage, à l'intérieur du moule, pour les demi-coquilles ou autres parties constitutives moulées ;
- en destinant le procédé, et en adaptant le moule, à la fabrication de toutes pièces entièrement creuses, partiellement creuses ou au contraire pleines.

## Revendications

1. Procédé de moulage de pièces par injection finie avec assemblage intégré, plus particulièrement pour le moulage de pièces (26) telles que des corps creux, composées de deux parties constitutives ou demi-coquilles (23, 24) réunies par un joint (25) ou autre partie intermédiaire, le procédé prévoyant le moulage par injection des deux parties constitutives ou demi-coquilles (23,24) dans un même moule d'injection, dans des zones respectives de ce moule éloignées l'une de l'autre, puis le transfert des deux parties ou demi-coquilles moulées (23,24) vers la zone centrale du moule, et l'assemblage de ces deux parties ou demi-coquilles (23,24) l'une à l'autre dans cette zone centrale, par surmoulage d'un joint (25) ou par une liaison mécanique (27), avant extraction de la pièce finie (26) hors du moule, **caractérisé en ce que** l'une (23) des deux parties constitutives ou demi-coquilles (23,24) de cette pièce (26) est transférée par rotation, à l'intérieur du moule depuis sa zone excentrée de moulage vers la zone centrale du moule, mais en dehors de l'axe (A) central du moule, tandis que l'autre (24) des deux parties constitutives ou demi-coquilles (23,24) de la même pièce (26) est transférée en restant sensiblement parallèle à elle-même, depuis sa zone excentrée de moulage vers la zone centrale du moule, mais en dehors de l'axe (A) central du moule, en vue d'être assemblée la première partie constitutive ou demi-coquille (23), transférée par rotation.

2. Procédé selon la revendication 1, **caractérisé en ce que** le transfert de la première (23) des deux parties constitutives ou demi-coquilles (23, 24) de chaque pièce (26), depuis sa zone excentrée de moulage vers la zone centrale du moule, mais en dehors de l'axe (A) central du moule, est réalisé par une rotation de 180° autour de l'axe (A) central du moule.

3. Procédé selon la revendication 1 ou 2, **caractérisé en ce que** le transfert de la seconde (24) des deux parties constitutives ou demi-coquilles (23,24) de chaque pièce (26), depuis sa zone excentrée de moulage vers la zone centrale du moule, mais en dehors de l'axe (A) central du moule, est réalisé par une translation (F2) suivant une direction radiale, par rapport à l'axe (A) central du moule.

4. Dispositif de moulage de pièces par injection avec assemblage intégré, pour la mise en oeuvre du procédé selon l'ensemble des revendications 2 et 3, **caractérisé en ce qu'**il comprend, en combinaison :
- un corps de moule mobile (2) avec un noyau de moulage (6) excentré pour l'une (23) des parties constitutives ou demi-coquilles (23,24) à mouler, et avec une empreinte de moulage (5) excentrée, et située à l'opposé dudit noyau de moulage (6), pour l'autre (24) des parties constitutives ou demi-coquilles (23,24) à mouler,
- un corps de moule fixe (1) avec un noyau de moulage (9) excentré pour l'autre (24) des parties constitutives ou demi-coquilles à mouler, ce noyau de moulage (9) étant situé en regard de l'empreinte de moulage (5) du corps de moule mobile (2),
- une partie tournante (4) unique avec deux empreintes de moulage de moulage (7,8) diamétralement opposées, dont les fonds respectifs sont dirigés vers le corps de moule mobile (2), la partie tournante (4) étant montée rotative autour de l'axe central (A) du moule et étant aussi mobile en translation le long de cet axe central (A), chaque empreinte de moulage (7,8) de cette partie tournante (4) pouvant venir en correspondance avec le noyau de moulage (6) du corps de moule mobile (2), pour le moulage de l'une (23) des parties constitutives ou demi-coquilles (23,24) à mouler, ou par une rotation de 180° venir en correspondance avec un emplacement d'assemblage (10) situé sur le corps de moule mobile (2) entre l'axe central (A) du moule et l'empreinte de moulage (5) du corps de moule mobile (2), pour l'amenée de cette partie constitutive ou demi-coquille (23) moulée à l'emplacement d'assemblage (10),
- des moyens de transfert (22), essentiellement par translation, de l'autre partie constitutive ou demi-coquille moulée (24), entre l'empreinte de moulage (5) du corps de moule mobile (2), d'une part, et l'emplacement d'assemblage (10) situé sur ce même corps de moule (2), d'autre part,
- des moyens d'assemblage des deux parties constitutives ou demi-coquilles (23,24) moulées, à l'emplacement d'assemblage (10), et
- des moyens (22) d'extraction, hors du moule, de chaque pièce finie (26) résultant de l'assemblage des deux parties constitutives ou demi-coquilles (23,24).

5. Dispositif selon la revendication 4, **caractérisé en ce que** les moyens de transfert, essentiellement par translation, de ladite autre partie constitutive ou demi-coquille (24), depuis la zone périphérique du moule vers l'emplacement d'assemblage (10), sont constitués par un manipulateur ou robot (22), pourvu d'une main de préhension adaptée à la géométrie des parties ou pièces moulées.

6. Dispositif selon la revendication 5, **caractérisé en ce que** le même manipulateur ou robot (22) constitue, à la fois, les moyens de transfert de ladite autre partie constitutive ou demi-coquille (24) vers l'emplacement d'assemblage (10), et les moyens d'extraction hors du moule des pièces finies (26) résultant de l'assemblage des deux parties constitutives ou demi-coquilles (23,24).

7. Dispositif selon l'une des revendications 4 à 6, **caractérisé en ce que** l'emplacement d'assemblage (10) est réalisé comme un poste de moulage par injection (25) d'un joint ou autre partie intermédiaire, réunissant les deux parties constitutives ou demi-coquilles (23,24) moulées amenées audit emplacement d'assemblage (10).

8. Dispositif selon la revendication 7, **caractérisé en ce que** le corps de moule fixe (1) comporte des moyens (11 et 17) d'amenée de matière à injecter vers les emplacements de moulage (5 à 9) des deux parties constitutives ou demi-coquilles (23,24), ainsi que vers l'emplacement d'assemblage (10) de ces deux parties constitutives ou demi-coquilles (23,24).

9. Dispositif selon la revendication 8, **caractérisé en ce que** les moyens d'amenée de matière à injecter comprennent :
- une première buse d'injection (12) située, sur le corps de moule fixe (1), en regard du noyau de moulage (6) excentré porté par le corps de moule mobile (2), et apte aussi à venir en correspondance avec une empreinte de moulage (7,8) de la partie tournante (4), pour le moulage de l'une (23) des parties constitutives ou demi-coquilles (23,24),
- une deuxième buse d'injection (13) située, sur le corps de moule fixe (1), en regard de l'empreinte de moulage (5) excentrée portée par le corps de moule mobile (2), pour le moulage de l'autre (24) des parties constitutives ou demi-coquilles (23,24), et
- une troisième buse d'injection (17) située, sur le corps de moule fixe (1), en regard de l'emplacement d'assemblage (10), pour le moulage du joint (25) ou partie intermédiaire réunissant les deux parties constitutives ou demi-coquilles (23,24), cette troisième buse d'injection (17) étant prévue pour s'engager dans une ouverture traversante (18,19) ménagée dans la partie tournante (4) du moule.

10. Dispositif selon l'une des revendications 4 à 9, **caractérisé en ce que** l'unique partie tournante (4) du moule est solidaire d'un arbre (20) de support et d'entraînement qui traverse de façon coulissante le corps de moule mobile (2), cet arbre (20) étant de préférence un arbre cannelé (21) sur au moins une fraction de sa longueur.

11. Dispositif selon la revendication 10, **caractérisé en ce que** l'arbre cannelé (20, 21) de support et d'entraînement de la partie tournante (4) est prévu pour être accouplé à une base mécanique tournante, pour l'entraînement en rotation de ladite partie tournante (4).

## Patentansprüche

1. Verfahren zum Spritzgießen von Bauteilen mit gleichzeitiger Verbindung, insbesondere zum Gießen von Fertigteilen (26) wie es Hohlköper sind, die aus zwei mittels einer Naht (25) oder eines anderen Zwischenteils zusammengefügten Halbzeugen oder Halbschalen (23, 24) bestehen, wobei das Verfahren das Spritzgießen der zwei Halbzeuge oder Halbschalen (23, 24) in einer selben Spritzform in jeweiligen voneinander entfernten Zonen dieser Form vorsieht, gefolgt von der Verlagerung der zwei geformten Halbzeuge oder Halbschalen (23, 24) in Richtung der zentralen Zone der Form und der Verbindung dieser zwei Halbzeuge oder Halbschalen (23, 24) miteinander in dieser zentralen Zone durch Overmoulding einer Naht (25) oder durch eine mechanische Verbindung (27) vor Extraktion des Fertigteils (26) aus der Form, **dadurch gekennzeichnet, dass** eines (23) der zwei Halbzeuge oder Halbschalen (23, 24) dieses Teils (26) in der Form durch Rotation von seiner exzentrierten Gusszone, aber außerhalb der zentralen Achse (A) der Form, in die zentrale Zone der Form verlagert wird, wogegen das andere (24) der zwei Halbzeuge oder Halbschalen (23, 24) desselben Teils (26), indem es etwa parallel zu sich selbst bleibt, von seiner exzentrierten Gusszone, aber außerhalb der zentralen Achse (A) der Form, verlagert wird, um mit dem ersten, durch Rotation verlagerten Halbzeug oder Halbschale (23) verbunden zu sein.

2. Verfahren nach Anspruch 1, **dadurch gekennzeichnet, dass** die Verlagerung des ersten (23) der zwei Halbzeuge oder Halbschalen (23, 24) jedes Teils (26) von seiner exzentrierten Gusszone in die zentrale Zone der Form, aber außerhalb der zentralen Achse (A) der Form, durch eine Rotation von 180° um die zentrale Achse (A) der Form durchgeführt wird.

3. Verfahren nach Anspruch 1 oder 2, **dadurch gekennzeichnet, dass** die Verlagerung des zweiten (24) der zwei Halbzeuge oder Halbschalen (23, 24) jedes Teils (26) von seiner exzentrierten Gusszone in die zentrale Zone der Form, aber außerhalb der zentralen Achse (A) der Form, durch eine Verschiebung (F2) gemäß einer radialen Richtung im Verhältnis zur zentralen Achse (A) der Form durchgeführt wird.

4. Vorrichtung zum Spritzgießen mit gleichzeitiger Verbindung zur Umsetzung des Verfahrens nach der Anspruchsgruppe 2 und 3, **dadurch gekennzeichnet, dass** sie in Kombination umfasst:
- einen beweglichen Formkörper (2) mit einem exzentrierten Formkern (6) für eines (23) der zu gießenden Halbzeuge oder Halbschalen (23, 24), und mit einer exzentrierten Formmatrize (5), die sich gegenüber dem Formkern (6) befindet, für das andere (24) der zu gießenden Halbzeuge oder Halbschalen (23, 24),
- einen starren Formkörper (1) mit einem exzentrierten Formkern (9) für das andere (24) der zu gießenden Halbzeuge oder Halbschalen, wobei sich dieser Formkern (9) gegenüber der Formmatrize (5) des beweglichen Formkörpers (2) befindet,
- ein einziges Drehteil (4) mit zwei diametral gegenüberliegenden Formmatrizen (7, 8), deren jeweilige Böden zum beweglichen Formkörper (2) zeigen, wobei das Drehteil (4) um die zentrale Achse (A) der Form rotierend montiert ist und ebenfalls in Verlagerung entlang dieser zentralen Achse (A) bewegbar ist, wobei jede Formmatrize (7, 8) dieses Drehteils (4) mit dem Formkern (6) des beweglichen Formkörpers (2) zum Gießen eines (23) der zu gießenden Halbzeuge oder Halbschalen (23, 24) in Korrespondenz kommen kann, oder durch eine Rotation um 180° mit einer Verbindungsstelle (10) auf dem beweglichen Formkörper (2) zwischen der zentralen Achse (A) der Form und der Formmatrize (5) des beweglichen Formkörpers (2) für die Zuführung dieses gespritzten Halbzeugs oder Halbschale (23) an die Verbindungsstelle (10) in Korrespondenz kommen kann,
- Verlagerungsmittel (22), im Wesentlichen durch Verschiebung, des anderen gegossenen Halbzeugs oder Halbschale (24) zwischen die Formmatrize (5) des beweglichen Formkörpers (2) einerseits und die Verbindungsstelle (10), die sich auf demselben Formkörper (2) befindet, andererseits,
- Verbindungsmittel der zwei gegossenen Halbzeuge oder Halbschalen (23, 24) an der Verbindungsstelle (10), und
- Extraktionsmittel (22) aus der Form jedes Fertigteils (26) im Ergebnis der Verbindung der zwei Halbzeuge oder Halbschalen (23, 24).

5. Vorrichtung nach Anspruch 4, **dadurch gekennzeichnet, dass** die Verlagerungsmittel, im Wesentlichen durch Verschiebung, des anderen Halbzeugs oder Halbschale (24) aus der peripheren Zone der Form zur Verbindungsstelle (10) von einem Manipulator oder Roboter (22) gebildet werden, der mit einer Greifhand ausgestattet ist, die an die Geometrie der gegossenen Halbzeuge oder Teile angepasst ist.

6. Vorrichtung nach Anspruch 5, **dadurch gekennzeichnet, dass** derselbe Manipulator oder Roboter (22) sowohl die Verlagerungsmittel des anderen Halbzeugs oder Halbschale (24) zur Verbindungsstelle (10) und die Extraktionsmittel der Fertigteile (26) im Ergebnis der Verbindung der zwei Halbzeuge oder Halbschalen (23, 24) aus der Form bildet.

7. Vorrichtung nach einem der Ansprüche 4 bis 6, **dadurch gekennzeichnet, dass** die Verbindungsstelle (10) wie ein Spritzgießschritt (25) einer Naht oder eines anderen Verbindungsabschnitts realisiert ist, der die zwei gegossenen Halbzeuge oder Halbschalen (23, 24) verbindet, die zur Verbindungsstelle (10) geführt wurden.

8. Vorrichtung nach Anspruch 7, **dadurch gekennzeichnet, dass** der starre Formkörper (1) des Spritzmaterial-Zufuhrmittel (11 und 17) zu den Spritzgussstellen (5 bis 9) der zwei Halbzeuge oder Halbschalen (23, 24) sowie zur Verbindungsstelle (10) dieser zwei Halbzeuge oder Halbschalen (23, 24) aufweist.

9. Vorrichtung nach Anspruch 8, **dadurch gekennzeichnet, dass** die Spritzmaterial-Zufuhrmittel umfassen.
- eine erste Einspritzdüse (12), die sich auf dem starren Formkörper (1) gegenüber dem exzentrierten Formkern (6), der von dem beweglichen Formkörper (2) getragen wird, befindet und auch imstande ist, für das Gießen eines (23) der Halbzeuge oder Halbschalen (23, 24) mit einer Formmatrize (7, 8) des Drehteils (4) in Korrespondenz zu kommen,
- eine zweite Einspritzdüse (13), die sich auf dem starren Formkörper (1) gegenüber der exzentrierten Formmatrize (5), die von dem beweglichen Formkörper (2) getragen wird, befindet, für das Gießen des anderen (24) der Halbzeuge oder Halbschalen (23, 24), und
- eine dritte Einspritzdüse (17), die sich auf dem starren Formkörper (1) gegenüber der Verbindungsstelle (10) befindet, für das Gießen der Naht (25) oder des Verbindungsabschnitts, die/der die zwei Halbzeuge oder Halbschalen (23, 24) verbindet, wobei diese dritte Einspritzdüse (17) dafür vorgesehen ist, in eine durchgehende Öffnung (18, 19) einzugreifen, die im Drehteil (4) der Form ausgebildet ist.

10. Vorrichtung nach einem der Ansprüche 4 bis 9, **dadurch gekennzeichnet, dass** das einzige Drehteil (4) der Form mit einer Stütz- und Antriebswelle (20) verbunden ist, die den beweglichen Formkörper (2) gleitend durchquert, wobei diese Welle (20) vorzugsweise eine über mindestens einen Teil ihrer Länge geriffelte Welle (21) ist.

11. Vorrichtung nach Anspruch 10, **dadurch gekennzeichnet, dass** die geriffelte Stütz- und Antriebswelle (20, 21) des Drehteils (4) vorgesehen ist, um für einen Rotationsantrieb des Drehteils (4) an eine drehende mechanische Basis gekoppelt zu sein.

## Claims

1. A method for the casting of articles by injection, with integrated assembly, and more particularly for the casting of finished articles (26) such as hollow objects, made up of two constitutive parts or half-shells (23, 24) held together by a joint (25) or other intermediate element, the method providing for the casting by injection of the two constitutive parts or half-shells (23, 24) in the same injection mould, but in zones of this mould some distance apart, and then the transfer of the two parts or half-shells (23,24) to the central zone of the mould, and the assembly of the two parts or half-shells (23,24) in this central zone, by recasting a joint (25) or by a mechanical link or bond (27), before extraction of the finished article (26) from the mould, **characterized by** the fact that one (23) of the two constitutive parts or half-shells (23,24) of the finished article (26) is transferred by rotation, inside the mould, from its outlying cast zone towards the central zone of the mould, but is offset from the central axis (A) of the mould, while the other (24) of the two constitutive parts or half-shells (23,24) of the same finished article (26) is transferred while remaining roughly in its own alignment, from its outlying cast zone towards the central zone of the mould but offset from the central axis (A) of the mould, so that it can be assembled with the first constitutive part or half-shell (23), transferred by rotation.

2. A method according to claim 1, **characterized by** the fact that the transfer of the first (23) of the two constitutive parts or half-shells (23, 24) of each finished article (26), from its outlying cast zone towards the central zone of the mould, but offset from the central axis (A) of the mould is made by a rotation of 180° around the central axis (A) of the mould.

3. A method according to claims 1 or 2, **characterized by** the fact that the transfer of the second (24) of the two constitutive parts or half-shells (23, 24) of each finished article (26), from its outlying cast zone towards the central zone of the mould, but offset from the central axis (A) of the mould, is made by a radial translation (F2) following a radial direction relative to the central axis (A) of the mould.

4. A method for the casting of articles by injection with integrated assembly, carrying out the procedure as in the whole of claims 2 and 3, and **characterized by**, in combination:
- a mobile mould structure (2) with a mould core (6) offset for one (23) of the constitutive parts or half-shells (23,24) to be cast, and with an offset mould cavity(5), situated opposite this mould core (6), for the other (24) of these constitutive parts or half-shells (23,24) to be cast,
- a fixed mould structure (1) with a mould core (9) offset for the other (24) of the constitutive parts or half-shells to be cast, this mould core (9) being situated facing the mould cavity (5) of the mobile mould structure (2),
- a single turning component (4) with two mould cavities (7,8) diametrically opposite each other, and whose bases are both directed towards the mobile mould structure (2), the turning component (4) being mounted so as to rotate around the central axis (A) of the mould and also being mobile in translation along this central axis (A), each mould cavity (7,8) of this turning component (4) being able to align with the mould core (6) of the mobile mould structure (2), for the casting of one (23) of the constitutive parts or half-shells (23,24) to be cast, or by a rotation of 180° aligning at an assembly point (10) situated on the mobile mould structure (2) between the central axis (A) of the mould and the mould cavity (5) of the mobile mould structure (2), for the transfer of this constitutive part or half-shell (23) to the place of assembly (10),
- the means of transfer (22), essentially by translation, of the other constitutive part or half-shell (24), from the mould cavity (5) of the mobile mould structure (2), to the place of assembly (10)situated on the same structure (2),
- the means of assembly of the two constitutive parts or half-shells (23,24) cast, at the assembly point (10), and
- the means (22) of extraction from the mould, of each finished article (26) resulting from the assembly of the two constitutive parts or half-shells (23,24).

5. A method according to claim 4, **characterized by** the fact that the means of transfer, essentially by translation, of the second constitutive part or half-shell (24), from its outlying zone of casting towards the assembly zone (10), consists of a handling device or robot (22), with a prehensile arm adapted to the geometry of the cast parts.

6. A method according to claim 5, **characterized by** the fact that this same handling device or robot (22) represents both the means of transfer of the second constitutive part or half-shell (24) towards the assembly point (10), and the means of extraction from the mould of the finished articles (26) resulting from the assembly of the two constitutive parts or half-shells (23,24).

7. A method according to one of claims 4 to 6, **characterized by** the fact that the assembly point (10) consists of a position for the casting by injection (25) of a joint or other type of intermediate bond or link, uniting the two constitutive parts or half-shells (23,24) already cast and brought to this assembly point (10).

8. A method according to claim 7, **characterized by** the fact that the fixed mould structure (1) includes the means (11 and 17) for bringing the matter to be injected to the casting positions (5 to 9) of the two constitutive parts or half-shells (23,24), as well as to the assembly point (10) of these two constitutive parts or half-shells (23,24).

9. A method according to claim 8, **characterized by** the fact that the means of bringing the matter to be injected consist of:
- a first injection nozzle (12) situated on the fixed mould structure (1), facing the offset mould core (6) on the mobile mould structure (2), and also capable of coming into alignment with a mould cavity (7,8) of the turning component (4), for the casting of the first (23) of the constitutive parts or half-shells (23,24),
- a second injection nozzle (13) situated on the fixed mould structure (1), facing the offset mould cavity (5) on the mobile mould structure (2), for casting the other (24) of the constitutive parts or half-shells (23,24), and
- a third injection nozzle (17) situated on the fixed mould structure (1), facing the assembly point (10), for the casting of the joint (25) or intermediate bond or link uniting the two constitutive parts or half-shells (23,24), this third injection nozzle (17) being designed to penetrate a through-going opening (18,19) built into the turning component (4) of the mould.

10. A method according to claims 4 to 9, **characterized by** the fact that the sole turning component (4) of the mould is attached to a support and drive shaft (20) that slides through the mobile mould structure (2), this shaft (20) being preferably grooved (21) for at least part of its length.

11. A method according to claim 10, **characterized by** the fact that the grooved support and drive shaft (20, 21) of the turning component (4) is designed to be coupled to a mechanical turning base for the rotational drive of this turning component (4).
